# EUROPÄISCHE PATENTSCHRIFT

(11) **EP 0 377 055 B1**
(45) Veröffentlichungstag und Bekanntmachung des Hinweises auf die Patenterteilung: **07.09.1994**
(21) Anmeldenummer: 88121922.4
(22) Anmeldetag: 31.12.1988
(51) Int. Cl.: G08C 23/00, G06K 11/06

(54) **Elektrooptische Anordnung zur Fernbedienung elektronischer Geräte**
Electro-optical arrangement for the remote control of electronic apparatuses
Dispositif électro-optique pour la commande à distance d'appareils électroniques

(43) Veröffentlichungstag der Anmeldung: 11.07.1990
(73) Patentinhaber: Deutsche ITT Industries GmbH, 79108 Freiburg (DE)
(72) Erfinder: Heberle, Klaus, Dipl-Ing. (FH), D-7801 Reute (DE)

(56) Entgegenhaltungen:
- US-A- 4 565 999
- US-A- 4 745 402

## Beschreibung

Elektronische Geräte, die fernsteuerbar sind, finden zunehmend Verbreitung, besonders wenn es sich dabei um Geräte der Unterhaltungselektronik handelt. Hierunter zählen vor allen Dingen Fernsehgeräte, Videorecorder, Phonogeräte und dergleichen mehr. Ähnlich ist es, wenn Heimcomputer, Garagentore, Rolläden und ähnliches bedient werden sollen. Dabei werden in Abhängigkeit von vom Benutzer zu betätigenden Tasten Steuersignalen für das bzw. die zu steuernden Geräte ausgelöst. Als Übertragungsmedium dient ein entsprechend moduliertes oder codiertes Ultraschall- oder Infrarot-Signal.

Bei der Vielzahl der bereits an einem einzigen Gerät zu steuernden Funktionen, z.B. bei einem Fernsehgerät das außer den zu empfangenden Programmen noch Teletext empfängt und zusätzlich an einen Videorecorder angeschlossen ist, ist eine entsprechende Vielzahl von Steuerbefehlen erforderlich, denen eine entsprechende Anzahl von Tasten des Fernsteuergebers entspricht. Eine Reduktion ist durch Mehrfachbelegung der Tasten möglich, wobei die Bedienung aber unübersichtlich wird. Eine drastische Reduzierung der Tastenanzahl ist auf diese Weise nicht möglich.

Einen Ausweg aus dieser Situation bietet der sogenannte interaktive Betrieb mit dem zu steuernden Gerät, der z. B. bei Rechnern üblich ist, wo über den Bildschirm dem Bedienenden ein "Menü" aus einer Vielzahl von möglichen Steuerungs- oder Bedienungsbefehlen angeboten wird, aus denen der Bedienende dann über das Tastenfeld oder mit einer sogenannten "Maus" den gewünschten auswählt.

Dabei bestimmt die jeweilige Position der auf dem Tisch bewegten Maus die Position eines Cursers (=Markierungsfleck) auf dem Bildschirm.

In US-A 4 745 402 ist eine elektrooptische Anordnung zur Fernbedienung elektronischer Geräte beschrieben, die zur Steuerung der vorgesehenen Funktionen die räumliche Ausrichtung des Fernbedienungsgebers zum Fernbedienungsempfänger verwendet. Die Richtungsinformation der positionsabhängigen Steuerung wird für jede Richtung durch drei Infrarot-Sendedioden bestimmt, die mit Rechtecksignalen unterschiedlicher Phasenlage angesteuert sind. Den drei Strahlungsdiagrammen sind in der jeweiligen Raumebene drei überlappende Winkelbereiche zugeordnet. Empfangsseitig wird aus den drei in der Phase unterschiedlichen Signalen ein einziges, resultierendes Signal gebildet, dessen Phasenlage je nach der Winkelstellung des Fernbedienungsgebers von einer Referenzphase abweicht. Aus der gemessenen Phasendifferenz wird der zugehörige Ausrichtungswinkel bestimmt. Damit die Messung in zwei Raumebenen erfolgen kann, werden die drei Infrarotsignalquellen zu einem Diodenfeld aus mindestens acht Infrarotdioden ergänzt, wobei die Strahlungsdiagramme der Dioden möglichst gleich und rotationssymmetrisch sind, ihre Achsen aber in unterschiedliche Raumrichtungen zielen. Die Referenzphase wird mittels einer Phasenverriegelungsschleife definiert, die mittels einer Synchronisationsabfolge von Fernbedienungsgeber synchronisiert wird.

Es ist daher Aufgabe der in den Ansprüchen gekennzeichneten Erfindung für elektronische Geräte eine einfache elektrooptische Anordnung anzugeben, die auch bei fernbedienten elektronischen Geräten eine derartige Positionssteuerung ermöglicht, um die erforderliche Anzahl von Tasten zu reduzieren.

Die Positionssteuerung nach der Erfindung besteht darin, mittels einer geeigneten elektrooptischen Anordnung die relative Position des Fernbedienungsgebers bezüglich der jeweiligen Verbindungslinie zwischen Fernbedienungsgeber und elektronischem Gerät auszuwerten. Durch Kippen des Fernbedienungsgebers, z.B. in vertikaler oder in horizontaler Richtung, werden im elektronischen Gerät mittels einer Auswerteschaltung Bezugssignale erzeugt, die dem Kippwinkel in der jeweiligen Richtung entsprechen. Von besonderem Vorteil ist dabei, daß die Auswertung des jeweiligen Kippwinkels auch eine kontinuierliche Steuerung ermöglicht, die beispielsweise bei der Lautstärkeeinstellung erwünscht ist; aber auch dann, wenn mittels des Fernbedienungsgebers, z.B. bei einem Heimrechner, graphische Darstellungen auf dem Bildschirm erzeugt werden sollen. Die kombinierte Auswertung der beiden Kipprichtungen erlaubt nämlich eine kontinuierliche Bewegungssteuerung in jeder Richtung auf dem Bildschirm.

Der Grundgedanke der elektrooptischen Anordnung nach der Erfindung besteht darin, daß drei Strahlungsquellen, deren Strahlungsdiagramme untereinander und bezüglich der drei Raumachsen unterschiedlich sind, den geberseitigen Anteil der elektrooptischen Anordnung bilden und daß dadurch auf der Empfängerseite, je nach Kipprichtung des Fernbedienungsgebers, unterschiedliche Strahlungsintensitäten empfangen werden, deren Relation zueinander zur Positionsbestimmung ausgewertet werden.

Die Erfindung wird nun anhand der Figuren der Zeichnungen näher erläutert.
Fig. 1 zeigt stark schematisiert, das der Erfindung zugrundliegende Prinzip anhand der Strahlungsdiagramme dreier Strahlungsquellen in einem Fernbedienungsgeber,
Fig. 2 zeigt stark schematisiert die Empfängerseite der elektrooptischen Anordnung mit einem als Blockschaltbild ausgeführten Ausführungsbeispiel der Empfangsschaltung,
Fig. 3a und Fig. 3b zeigen schematisiert eine Detailansicht einer besonders vorteilhaften senderseitigen elektrooptischen Anordnung.
Fig. 4 zeigt als schematisches Beispiel eine Strahlungsquelle mit Lamellenblende.

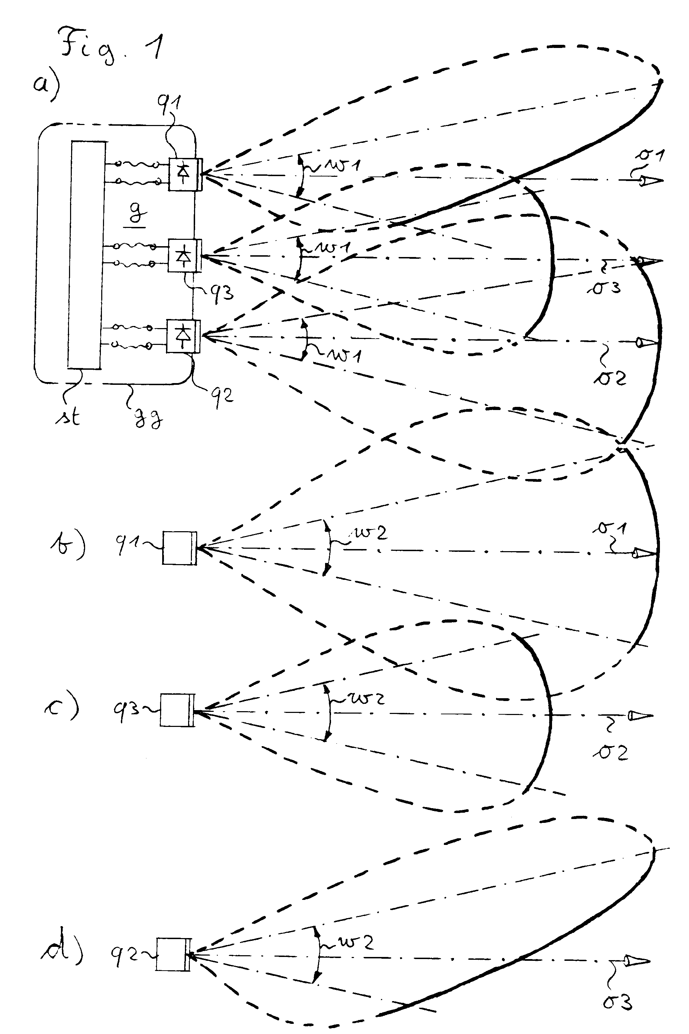

Die Fig. 1a zeigt in schematischer Aufsicht die drei Strahlungsdiagramme der drei im Fernbedienungsgeber g vorhandenen Strahlungsquellen q1, q2, q3. Die drei anderen Teilfiguren b), c), d) der Fig. 1 zeigen die zugehörigen schematischen Seitenansichten dieser drei Strahlungsdiagramme. Sie sind ebenfalls gestrichelt dargestellt, der wesentliche Teil ist dagegen mittels einer durchgezogenen Linie hervorgehoben.

Die Ansteuerung der drei Strahlungsquellen q1, q2, q3 erfolgt mittels der Steuereinrichtung st, die beispielsweise die drei Strahlungsquellen im Zeitmultiplexbetrieb impulsweise mit einer kurzen Zwischenpause nacheinander ansteuert und als Kennungssignal nach jedem dritten Impuls eine verlängerte Pause einfügt. Die drei Strahlungsquellen befinden sich an der Stirnseite des Fernbedienungsgehäuses gg, zu dessen längsliegender Gehäuseachse die drei optischen Achsen o1, o2, o3 der drei Strahlungsquellen parallel ausgerichtet sind.

Der Fernbedienungsgeber g kann selbstverständlich wie bei üblichen Fernbedienungsgebern zusätzlich eine Tastatur-Codierschaltung enthalten, das über weitere elektronische Einrichtungen ein codiertes Signal erzeugt, das über eine Infrarot-Leuchtdiode ausgestrahlt wird. Hierzu würde sich z.B. auch die dritte Strahlungsquelle q3 wegen ihres gleichförmigen Strahlungsdiagramms eignen. Über das Tastenfeld oder spezielle Tasten ist der Menü-Betrieb auch zu starten und der ausgewählte Bedienungsbefehl auszulösen.

Das Strahlungsdiagramm der ersten Strahlungsquelle q1 weist in der horizontalen Bezugsebene in Richtung ihrer optischen Achse o1, im dargestellten ersten Winkelbereich w1, einen sich stark ändernden Intensitätsverlauf auf. Bei den Strahlungsdiagrammen der zweiten und der dritten Strahlungsquelle q2, q3 ist dies nicht der Fall. Diese weisen in der Aufsicht im Winkelbereich w1 jeweils einen flachen Intensitätsverlauf auf. Zu beachten ist, daß die Strahlungsdiagramme jeweils als Projektion dargestellt sind. In der Darstellung von Fig. 1 weisen die Strahlungsdiagramme im Schnittpunkt mit ihren optischen Achsen alle etwa den gleichen Intensitätswert auf. Dies ist jedoch kein Erfordernis der Erfindung. Die Figuren 1b), c) und d) zeigen die vertikale Projektion der Strahlungsdiagramme der drei Strahlungsquellen q1, q3, q2. Als Bezugsebene für den zweiten Winkelbereich w2 gilt dabei diejenige Vertikalebene, in der die jeweilige optische Achse o1, o2, o3 liegt. In der vertikalen Bezugsebene weisen die Strahlungsdiagramme der ersten und der dritten Strahlungsquelle q1, q3 im zweiten Winkelbereich w2 einen flachen Intensitätsverlauf auf, während die zweite Strahlungsquelle q2 einen sich stark ändernden Intensitätsverlauf enthält. Wird die zweite Strahlungsquelle q2 nach oben bzw. nach unten gekippt, dann nimmt ihre Intensität ab bzw. zu.

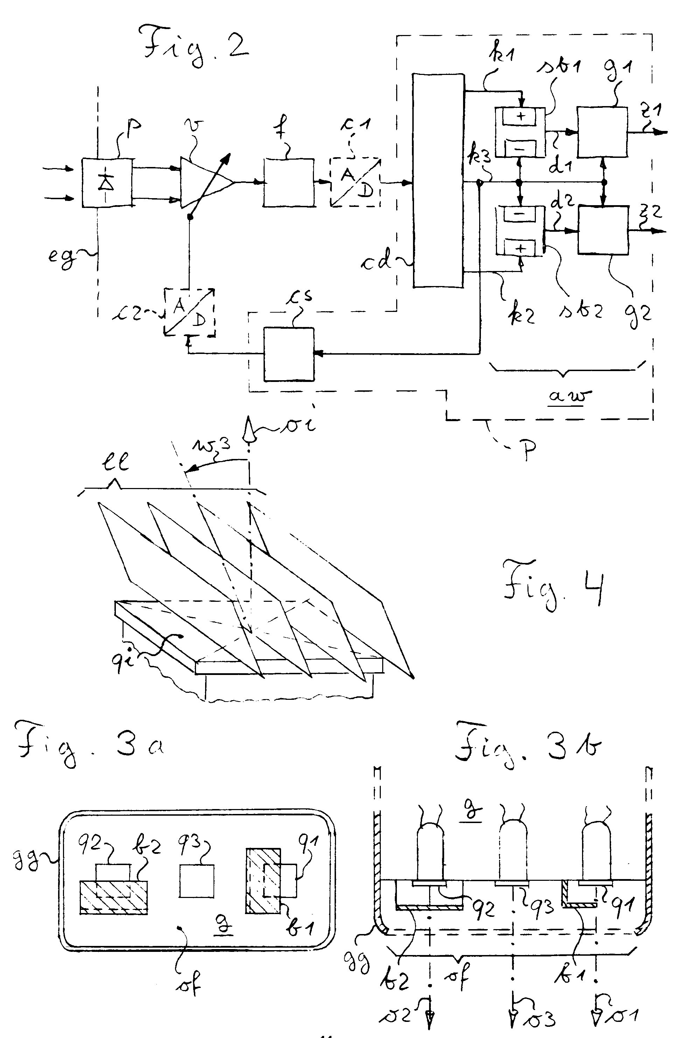

In Fig. 2 ist ein einfaches Ausführungsbeispiel der empfängerseitigen elektrooptischen Anordnung dargestellt. Und zwar dient der Strahlungsdetekor p dem gemeinsamen Empfang der von den drei Strahlungsquellen q1, q2, q3 ausgehenden Strahlung. Der Strahlungsdetekor p auf der Stirnseite des elektronischen Gerätes eg enthält z.B. eine Infrarot-Empfangsdiode, deren Ausgangssignale mittels des regelbaren Verstärkers v verstärkt werden und über das Filter f zur Störungsbefreiung mit der Decodierschaltung cd gekoppelt sind. Diese trennt beispielsweise die drei im Multiplexbetrieb empfangenen Impulse und bildet die drei Komponentensignale k1, k2, k3, die dem jeweils empfangenen Signal der ersten, der zweiten und der dritten Strahlungsquelle q1, q2, q3 entsprechen.

Mit diesen drei Komponentensignale k1 k2, k3 ist eine Auswerteschaltung aw gespeist, die Bezugssignale z1, z2 erzeugt, die dem Kippwinkel in der jeweiligen Bezugsebene entsprechen. Die in der Fig. 2 dargestellte Auswerteschaltung aw ist besonders einfach, denn sie bildet mittels des ersten Subrahierers sb1 aus dem ersten und dritten Komponentensignal k3 das erste Differenzsignal d1 und aus dem zweiten und dritten Komponentensignal k2, k3 mittels des zweiten Subrahierers sb2 das zweiten Differenzsignal d2.

In den beiden Subtrahierern sb1, sb2 wird somit der stark winkelabhängige Intensitätsverlauf des Strahlungsdiagramms der ersten bzw. der zweiten Strahlungsquelle q1, q2 mit dem relativ winkelunabhängigen Strahlungsdiagramm der dritten Strahlungsquelle q3 verglichen. Da die absolute Intensität sehr stark von der Entfernung abhängig ist, ist eine nachfolgende Normierung der beiden Differenzsignale d1, d2 mittels der ersten bzw. der zweiten Nomierungsschaltung g1, g2 erforderlich, die das erste bzw. das zweiten Differenzsignal d1, d2 jeweils durch den Wert des dritten Komponentensignals k3 dividiert und so als Ausgangssignal das erste bzw. das zweite Bezugssignal z1, z2 bildet. Der jeweilige Wert dieser beiden Bezugssignale ist somit angenähert proportional zum jeweiligen Kippwinkel.

Der regelbare Verstärker v gleicht ebenfalls teilweise die entfernungsabhängige Intensitätsänderung aus. Sein Steuersignal wird vom dritten Komponentensignal k3 abgeleitet, das über die Regelstufe cs tiefpaßgefiltert ist. Der regelbare Verstärker v ist insbesondere dann erforderlich, wenn die Decodierschaltung cd und die Auswerteschaltung aw als digitale Schaltungen ausgeführt sind. Ohne den regelbaren Verstärker v könnte nämlich bei großer Entferung die Auflösung des Analog-Digitalumsetzers c1 infolge der kleinen Signalamplitude zu ungenau werden, wenn nur wenige Quantisierungsstufen beteiligt sind. Der Steuereingang des regelbaren Verstärkers v ist bei digitaler Verarbeitung über den Digital-Analogumsetzer c2 angesteuert.

Der Analog-Digitalumsetzer c1 erlaubt, daß im fernzubedienenden elektronischen Geräte eg die Decodierschaltung cd und die Auswerteschaltung aw auch mittels eines Mikroprozessors P realisierbar sind, der mit einem Programm geladen ist, das gleichwirkend wie die Decodierschaltung cd und die Auswerteschaltung aw ist. Zum Beispiel kann für die Positionserkennung dann ein bereits im elektronischen Gerät eg vorhandener Mikroprozessor mitverwendet werden, da die zu berechnenden Vorgänge langsam ablaufen und somit leicht in ein anderes Programm eingefügt werden können.

Die Erzeugung der in Fig. 1 dargestellten Strahlungsdiagramme ist auf vielerlei Weise möglich. Besonders einfach ist es, wenn mindestens die erste und zweite Strahlungsquelle q1, q2 linien- oder flächenförmig ausgebildet sind und in Richtung der optischen Achse o1, o2, in einigem Abstand von ihrer strahlenden Oberfläche, jeweils eine Blende b1, b2 aufweisen, die die zugehörige Strahlungsquelle q1, q2 teilweise verdeckt. Dabei muß die wirksame Blendenkante bei der ersten und bei der zweiten Strahlungsquelle q1, q2 eine räumliche Komponente senkrecht zur Richtung der ersten bzw. der zweiten Bezugsebene aufweisen. Dabei wird die erste bzw. die zweite Bezugsebene wie bereits angegeben durch ihre jeweilige optische Achse o1, o2 und die jeweilige Richtung bestimmt, in der der mögliche Kippwinkel, nämlich der erste bzw. zweite Winkelbereich w1, w2, liegt. Ferner ist erforderlich, daß das ohne Blende gemessene Strahlungsdiagramm der ersten und der zweiten Strahlungsquelle q1, q2 im ersten und im zweiten Winkelbereich w1, w2 einen symmetrischen, möglichst flachen Intensitätsverlauf aufweist.

Erst durch die beiden Blenden b1, b2 ändern sich somit je nach dem Kippwinkel die vom Strahlungsdetektor p aus gesehenen strahlenden Oberflächen der zwei Strahlungsquellen q1, q2 und damit deren Strahlungs-Intensitäten durch unterschiedliche Verdeckung im Sinne der in Fig. 1 angegebenen entsprechenden Strahlungsdiagramme.

Die Oberflächengestaltung der drei Strahlungsquellen ist dabei ziemlich nebensächlich. Es kann sich dabei um mattierte Oberflächen, also reine Kosinusstrahler handeln aber auch um Oberflächen, die die Strahlen in Richtung der optischen Achse bündeln, um so über die höhere Intensität die Fernbedienungsgrenze hinauszuschieben.

Ein besonders vorteilhaftes Ausführungsbeispiel der elektrooptischen Anordnung mit Blenden ist in Fig. 3 dargestellt. Fig. 3a zeigt die Stirnseite des Fernbedienungsgebers g, der im optischen Fenster of die drei Strahlungsquellen q1, q2, q3 mit jeweils quadratischer Strahlungsfläche enthält. Mittels der ersten Blende b1 ist bei der ersten Strahlungsquelle q1 die linke Hälfte abgedeckt und mittels der Blende b2 ist bei der zweiten Strahlungsquelle q2 die untere Hälfte abgedeckt. Bei Drehungen in der horizontalen Bezugsebene ändert sich somit der Bedeckungsgrad der ersten Strahlungsquelle q1, während der Bedeckungsgrad der zweiten Strahlungsquelle q2 nicht verändert wird.

Die nebenstehende Fig. 3b zeigt die Stirnseite dieses Fernbedienungsgebers g in der Aufsicht. Von der ersten Strahlungsquelle q1 wird dabei durch die erste Blende b1 die linke Hälfte verdeckt, während sich die Blendenkante der zweiten Blende b2 vor der gesamten zweiten Strahlungsquelle q2 erstreckt.

In Fig. 3b ist der Abstand zu sehen in dem sich die beiden Blenden b1, b2 vor der jeweiligen Strahlungsflächen befinden. Die Wahl des jeweiligen Abstands ergibt sich aus der erforderlichen Winkelempfindlichkeit des Fernbedienungsgebers.

Die quadratische Ausbildung der Strahlungsflächen ist dabei besonders vorteilhaft, denn sie erlauben auf einfachste Weise eine Trennung der horizontalen und vertikalen Kipprichtung, sofern die Quadratkanten und die Blendenkanten in diesen Richtung ausgerichtet sind.

In Fig. 4 ist eine andere Ausbildung der Blenden gezeigt, nämlich in Form von Lamellenblenden 11, die um den festen Winkel w3 gegenüber der optischen Achse oi geneigt sind. Der jeweilige Neigungswinkel w3 liegt dabei außerhalb des ersten oder des zweiten Winkelbereiches w1, w2, so daß die maximale Durchlaß- und Sperrichung dieser Lamellenblenden 11 ebenfalls außerhalb des zugehörigen ersten oder zweiten Winkelbereichs w1, w2 liegen. Die Kombination der Lamellenblenden ist mit beliebigen linien- oder flächigen Strahlungsoberflächen qi möglich, besonders vorteilhaft jedoch wieder mit quadratischen Strahlungsflächen. Der Vorteil der Lamellenblenden 11 liegt darin, daß die Winkelempfindlichkeit gegenüber Einfachblenden wesentlich vergrößert ist. Je enger der Abstand zwischen den parallelen Lamellenblenden 11 ist, desto größer wird bei gleicher Lamellenform die Empfindlichkeit.

Eine andere Möglichkeit zur Erzeugung der in Fig. 1 beschriebenen Strahlungsdiagramme stellt die Verwendung optischer Mittel dar, die sich entweder in der Oberfläche der jeweiligen Strahlungsquellen befinden oder diesen vorgelagert sind. Als optische Mittel sind hier die üblichen optischen Grundformen angesprochen wie Prismen oder Linsen, wobei die Linsen zylindrisch, spährisch oder aspährisch ausgebildet sein können. Auch eine Kombination mehrerer Grundformen oder eine Feinstrukturierung wie z.B. bei der Fresnel-Linse ist möglich. Beispielsweise genügt ein einfaches Prisma, das die Strahlungskeule aus der ursprünglichen optischen Achse soweit herauskippt, daß im erforderlichen Winkelbereich w1 oder w2 um die ursprüngliche optische Achse der erforderliche steigende/fallende Intensitätsverlauf vorliegt. Ein entsprechend schräger Einbau der Strahlungsquelle hätte indessen die gleiche Wirkung.

## Patentansprüche

1. Elektrooptische Anordnung zur Fernbedienung elektronischer Geräte, insbesondere solcher der Unterhaltungselektronik, mit einem Fernbedienungsgeber (gg) räumlich zugeordneten Strahlungsquellen, deren maximale Strahlungsintensitäten in unterschiedliche Richtungen weisen und mit mindestens einem Strahlungsdetektor (p) in einer empfängerseitigen, elektrooptischen
Empfangseinrichtung (eg),
gekennzeichnet durch folgende Merkmale:
- eine erste Strahlungsquelle (q1), der eine erste optische Achse (o1) zugeordnet ist, hat ein Strahlungsdiagramm, das in einer von der ersten optischen Achse (o1) und einer ersten Richtung aufgespannten ersten Bezugsebene, in einem die optische Achse einschließenden ersten Winkelbereich (w1), einen steigenden/fallenden Intensitätsverlauf aufweist, der im wesentlichen monoton ist,
- eine zweite Strahlungsquelle (q2), der eine zweite optische Achse (o2) zugeordnet ist, hat ein Strahlungsdiagramm, das in einer von der zweiten optischen Achse (o2) und in einer zweiten Richtung aufgespannten zweiten Bezugsebene, in einem die optische Achse einschließenden zweiten Winkelbereich (w2), einen steigenden/fallenden Intensitätsverlauf aufweist, der im wesentlichen monoton ist,
- eine dritte Strahlungsquelle (q3), der eine dritte optische Achse (o3) zugeordnet ist, hat ein Strahlungsdiagramm, das mindestens in der ersten und in der zweiten Bezugsebene sowie im ersten und im zweiten Winkelbereich (w1, w2) einen im Vergleich zur ersten und zweiten Strahlungsquelle (q1, q2) flachen Intensitätsverlauf aufweist,
- der mindestens eine Strahlungsdetektor (p) dient dem Empfang der von den drei Strahlungsquellen (q1, q2, q3) ausgehenden Strahlung, wobei mittels einer nachfolgenden Auswerteschaltung (aw) die empfangenen Intensitäten der ersten und dritten und/oder der zweiten und dritten Strahlungsquelle (q1, q3; q2, q3) zur Bestimmung von Richtungssignalen miteinander verglichen werden.

2. Elektrooptische Anordung nach Anspruch 1 mit
- einer elektronischen Steuereinrichtung (st), die die drei Strahlungsquellen (q1, q2, q3) codiert ansteuert,
- einer Decodierschaltung (cd), die das Ausgangssignal des Strahlungsdetektors (p) in drei Komponentensignale (k1, k2, k3) trennt und einer Auswerteschaltung (aw) zuführt.

3. Elektrooptische Anordnung nach Anspruch 2, bei der die Auswerteschaltung (aw) mindestens einen Subtrahierer (sb1, sb2) und mindestens eine Normierungssschaltung (g1, g2) enthält, wobei aus dem ersten und dem dritten Komponentensignal (k1 , k3) ein erstes Differenzsignal (d1) und aus dem zweiten und dem dritten Komponentensignal (k2, k3) ein zweites Differenzsignal (d2) gebildet ist und diese beiden Differenzsignale (d1, d2) jeweils durch das dritte Komponentensignal (k3) dividiert sind und so ein erstes und ein zweites Bezugssignal (z1, z2) bilden.

4. Elektrooptische Anordnung nach Anspruch 3, wobei die Auswerteschaltung (aw) mit einem regelbaren Verstärker (v) gekoppelt ist, der zwischen dem Strahlungsdetektor (p) und die Decodierschaltung (cd) eingefügt ist und dessen Steuereingang mit dem dritten Komponentensignal (k3) über eine Regelstufe (cs) gekoppelt ist.

5. Elektrooptische Anordung nach Anspruch 4, wobei das Ausgangssignal des regelbaren Verstärkers (v) mittels eines Analog-Digitalumsetzers (c1) digitalisiert ist und die weiteren Stufen digitale sind.

6. Elektrooptische Anordnung nach Anspruch 5, wobei die dem Analog-Digitalumsetzer (c1) nachfolgenden Stufen durch einen Mikroprozessor realisiert sind, der mit einem Programm geladen ist, das gleichwirkend wie die Decodierschaltung (cd) und die Auswerteschaltung (aw) ist.

7. Elektrooptische Anordnung nach Anspruch 1, bei der mindestens die erste und die zweite Strahlungsquelle (q1, q2) linien- oder flächenförmig ausgebildet sind, in Richtung der optischen Achse, in einigem Abstand von der strahlenden Oberfläche jeweils eine Blende (b1, b2) aufweisen, die die zugehörige Strahlungsquelle (q1, q2,) teilweise verdeckt, wobei die wirksame Blendenkante bei der ersten bzw. bei der zweiten Strahlungsquelle (q1, q2) eine Komponente senkrecht zur Richtung der ersten bzw. der zweiten Bezugsebene aufweist und wobei das unbeeinflußte Strahlungsdiagramm der ersten und der zweiten Strahlungsquelle im ersten bzw. im zweiten Winkelbereich (w1, w2) einen symmetrischen, möglichst flachen Intensitätsverlauf aufweist.

8. Elektrooptische Anordnung nach Anspruch 7,
- bei der die strahlenden Oberflächen der drei Strahlungsquellen (q1, q2, q3) Quadrate sind, die in der zur gemeinsamen optischen Achse (o1, o2, o3) senkrechten Ebene liegen und deren Kanten zueinander rechtwinklig oder parallel ausgerichtet sind,
- bei der das unbeeinflußte Strahlungsdiagramm der drei Strahlungsquellen mindestens im ersten und zugleich im zweiten Winkelbereich w1, w2, die jeweils parallel zu einer Quadratseite sind, einen symmetrischen, möglichst flachen Intensitätsverlauf aufweist und
- bei der die wirksame Blendenkante gerade ist und sich senkrecht zur jeweils zugehörigen ersten oder zweiten Bezugsebene erstreckt.

9. Elektrooptische Anordnung nach Anspruch 7, bei der die beiden Blenden (b1, b2) jeweils als parallelstehende Lamellenblenden (11) ausgebildet sind, deren maximale Durchlaß- und Sperrichtungen außerhalb des zugehörigen ersten oder zweiten Winkelbereichs (w1, w2) liegen und deren Lamellenblenden bezüglich der zugehörigen optischen Achsen (o1, o2) in der ersten oder in der zweiten Bezugsebene gekippt sind.

10. Elektrooptische Anordnung nach Anspruch 1, bei der die drei Strahlungsquellen (q1, q2, q3) mindestens teilweise mit optisch wirksamen Oberflächen ausgestattet sind, die das von der jeweiligen Strahlungsquelle ausgehende Licht in bestimmten Richtungen bündeln.

11. Elektrooptische Anordnung nach Anspruch 10, bei der die optisch wirksamen Oberflächen aus Pr smen oder aus zylindrischen oder aus sphärischen oder asphärischen Linsen bestehen.

## Claims

1. An electrooptical arrangement for remotely controlling electronic apparatus (eg), particularly entertainment-electronics apparatus, with radiation sources which are spatially associated with a remote-control transmitter (g) and whose maximum radiation intensities point in different directions, and with at least one radiation detectors (p) in an electrooptical receiving device (eg) on the receiver side,
characterized by the following features:
- A first radiation source (q1), to which a first optical axis (o1) is assigned, has a radiation pattern which, in a first reference plane containing the first optical axis (o1) and a first direction and in a first angular range (q1) including the optical axis, has a rising/falling intensity characteristic which is essentially monotonic,
- a second radiation source (q2), to which a second optical axis (o2) is assigned, has a radiation pattern which, in a second reference plane containing the second optical axis (o2) and a second direction and in a second angular range (w2) including the optical axis, has a rising/falling intensity characteristic which is essentially monotonic,
- a third radiation source (q3), to which a third optical axis (o3) is assigned, has a radiation pattern which, in at least the first and second reference planes and in the first and second angular ranges (w1, w2), has an intensity characteristic which is flat compared with the intensity characteristics of the first and second radiation sources (q1, q2), and
- the at least one radiation detector (p) serves to detect the radiation emitted by the three radiation sources (q1, q2, q3), with a subsequent evaluating circuit (aw) comparing the received intensities of the first and third and/or second and third radiation sources (q1, q3; q2, q3) to determine direction signals.

2. An electrooptical arrangement as claimed in claim 1, comprising
- an electronic drive circuit (st) which drives the three radiation sources (q1, q2, q3) with coded signals, and
- a decoding circuit (cd) which separates the output signal of the radiation detector (p) into three component signals (k1, k2, k3) and feeds the latter to an evaluating circuit (aw).

3. An electrooptical arrangement as claimed in claim 2 wherein the evaluating circuit (aw) contains at least one subtractor (sb1, sb2) and at least one normalizing circuit (g1, g2), with a first difference signal (d1) being formed from the first and third component signals (k1, k3), and a second difference signal (d2) from the second and third component signals (k2, k3), and each of said two difference signals (d1, d2) being divided by the third component signal (k3) to form a first reference signal (z1) and a second reference signal (z2).

4. An electrooptical arrangement as claimed in claim 3 wherein the evaluating circuit (aw) is coupled to a variable-gain amplifier (v) which is connected between the radiation detector (p) and the decoding circuit (cd) and has its control inputs coupled to the third component signal (k3) through a control stage (cs).

5. An electrooptical arrangement as claimed in claim 4, wherein the output of the variable-gain amplifier (v) is digitized by means of an analog-to-digital converter (c1), and wherein the subsequent stages are digital ones.

6. An electrooptical arrangement as claimed in claim 5 wherein stages following the analog-to-digital converter (c1) are implemented with a microprocessor which is loaded with a program having the same effect as the decoding circuit (cd) and the evaluating circuit (aw).

7. An electrooptical arrangement as claimed in claim 1 wherein at least the first and second radiation sources (q1, q2) are line or area sources and each have, in the direction of the optical axis at some distance from the radiating surface, a diaphragm (b1, b2) covering part of the associated radiation source (q1, q2), the effective edge of the diaphragm having a component perpendicular to the direction of the first reference plane in the case of the first radiation source (q1) and a component perpendicular to the direction of the second reference plane in the case of the second radiation source (q2), and the uninfluenced radiation patterns of the first and second radiation sources having symmetrical intensity characteristics in the first and second angular ranges (w1, w2), respectively, which are as flat as possible.

8. An electrooptical arrangement as claimed in claim 7
- wherein the radiating surfaces of the three radiation sources (q1, q2, q3) are squares which lie in a plane perpendicular to the common optical axis (o1, o2, o3) and whose sides are at right angles or parallel to each other,
- wherein at least in the first and second angular ranges (w1, w2), each of which is parallel to one side of a square, the uninfluenced radiation patterns of the three radiation sources have symmetrical intensity characteristics which are as flat as possible, and
- wherein the effective diaphragm edge is straight and extends in a direction perpendicular to the respective associated first or second reference plane.

9. An electrooptical arrangement as claimed in claim 7, wherein each of the two diaphragms (b1, b2) consists of parallel leaves (11) which pass or block a maximum amount of light in a direction lying outside the associated first or second angular range (w1, w2) and which are inclined to the associated optical axes in the first or second reference plane.

10. An electrooptical arrangement as claimed in claim 1 wherein the three radiation sources (q1, q2, q3) have, at least in part, optically active surfaces which concentrate the light emitted by the respective radiation source in given directions.

11. An electrooptical arrangement as claimed in claim 10 wherein the optically active surfaces are formed by prisms or by cylindrical, spherical, or aspherical lenses.

## Revendications

1. Dispositif électro-optique pour la télécommande d'appareils électroniques, notamment d'appareils électroniques du spectacle, comportant des sources de rayonnement associées dans l'espace à un générateur de télécommande (gg) et dont les intensités maximales de rayonnement sont dirigées dans des directions différentes, et au moins un détecteur de rayonnement (p), situé dans un dispositif de réception électro-optique (eg) situé côté récepteur,
caractérisé par les caractéristiques suivantes :
- une première source de rayonnement (q1), à laquelle est associé un premier axe optique (o1), possède un diagramme de rayonnement qui possède, dans un premier plan de référence, qui contient le premier axe optique (o1) et s'étend dans une première direction, dans une première zone angulaire (w1) contenant l'axe optique, une variation d'intensité croissante/décroissante, qui est essentiellement monotone,
- une seconde source de rayonnement (q2), à laquelle est associé un second axe optique (o2), possède un diagramme de rayonnement, qui possède, dans un second plan de référence contenant le second axe optique (o2) et s'étendant dans une seconde direction, dans une seconde zone angulaire (w2) contenant l'axe optique, une variation d'intensité croissante/décroissante, qui est essentiellement monotone,
- une troisième source de rayonnement (q3), à laquelle est associé un troisième axe optique (o3), possède un diagramme de rayonnement, qui possède, au moins dans les premier et second plans de référence ainsi que dans les première et seconde zones angulaires (w1, w2), une variation d'intensité plate par rapport aux première et seconde sources de rayonnement (q1, q2),
- le au moins un détecteur de rayonnement (p) sert à recevoir le rayonnement qui est émis par les trois sources de rayonnement (q1, q2, q3), les intensités reçues des première et troisième sources de rayonnement et/ou des seconde et troisième sources de rayonnement (q1, q3; q2, q3) sont comparées entre elles, au moyen d'un circuit d'évaluation (aw) branché en aval, pour la détermination de signaux de direction.

2. Dispositif électro-optique selon la revendication 1 comportant
- un dispositif de commande électronique (st), qui commande d'une manière codée les trois sources de rayonnement (q1, q2, q3),
- un circuit décodeur (cd), qui divise le signal de sortie du détecteur de rayonnement (p) en trois composantes de signal (k1, k2, k3) et les envoie à un circuit d'évaluation (aw).

3. Dispositif électro-optique selon la revendication 2, dans lequel le circuit d'évaluation (aw) contient au moins un soustracteur (sb1, sb2) et au moins un circuit de normalisation (g1, g2), et dans lequel un premier signal différentiel (d1) est formé à partir des première et troisième composantes de signal (k1, k3), et un second signal différentiel (d2) est formé à partir des seconde et troisième composantes de signal (k2, k3), et ces deux signaux différentiels (d1, d2) sont divisés respectivement par la troisième composante de signal (k3) et forment ainsi des premier et second signaux de référence (z1, z2).

4. Dispositif électro-optique selon la revendication 3, dans lequel le circuit d'évaluation (aw) est couplé à un amplificateur réglable (v), qui est inséré entre le détecteur de rayonnement (p) et le circuit décodeur (cd) et dont l'entrée de commande est couplée à la troisième composante de signal (k3) par l'intermédiaire d'un étage de réglage (cs).

5. Dispositif électro-optique selon la revendication 4, dans lequel le signal de sortie de l'amplificateur réglage (v) est numérisé au moyen d'un convertisseur analogique/numérique (c1) et dans lequel les autres étages sont des étages numériques.

6. Dispositif électro-optique selon la revendication 5, dans lequel les étages situés en aval du convertisseur analogique/numérique (c1) sont constitués par un microprocesseur, qui est chargé par un programme, qui a une action équivalente au circuit décodeur (cd) et au circuit d'évaluation (aw).

7. Dispositif électro-optique selon la revendication 1, dans lequel au moins les première et seconde sources de rayonnement (q1, q2) sont réalisées sous la forme de lignes ou de surfaces, possèdent chacune, dans la direction de l'axe optique et à une certaine distance de la surface rayonnante, un diaphragme (b1, b2), qui masque partiellement la source de rayonnement associée (q1, q2), le bord actif du diaphragme possédant, dans le cas de la première ou de la seconde source de rayonnement (q1, q2), une composante perpendiculaire à la direction du premier ou du second plan de référence, et dans lequel le diagramme de rayonnement, non influencé, des première et seconde sources de rayonnement possède, dans la première ou la seconde zone angulaire (w1, w2), une variation d'intensité symétrique, aussi plate que possible.

8. Dispositif électro-optique selon la revendication 7, dans lequel
- les surfaces rayonnantes des trois sources de rayonnement (q1, q2, q3) sont des carrés, qui sont situés dans le plan perpendiculaire à l'axe optique commun (o1, o2, o3) et dont les bords sont orientés perpendiculairement ou parallèlement entre eux, et
- le diagramme de rayonnement non influencé des trois sources de rayonnement possède au moins dans la première zone angulaire et simultanément dans la seconde zone angulaire (w1, w2), qui sont respectivement parallèles à un côté du carré, une variation d'intensité symétrique, aussi plate que possible, et
- le bord actif du diaphragme est rectiligne et s'étend perpendiculairement au premier ou au second plan de référence respectivement associé.

9. Dispositif électro-optique selon la revendication 7, dans lequel les deux diaphragmes (b1, b2) sont réalisés respectivement sous la forme de diaphragmes à lamelles (11) parallèles, dont les directions de passage et de blocage maximum se situent à l'extérieur de la première ou de la seconde zone angulaire associée (w1, w2) et dont les diaphragmes à lamelles sont pivotés, par rapport aux axes optiques associés (o1, o2), dans le premier ou dans le second plan de référence.

10. Dispositif électro-optique selon la revendication 1, dans lequel les trois sources de rayonnement (q1, q2, q3) sont équipées au moins en partie de surfaces actives du point de vue optique, qui focalisent la lumière, qui sort de la source de rayonnement respective, dans des directions déterminées.

11. Dispositif électro-optique selon la revendication 10, dans lequel les surfaces actives du point de vue optique sont constituées par des prismes ou par des lentilles cylindriques ou des lentilles sphériques ou asphériques.
